# EUROPEAN PATENT APPLICATION

(11) **EP 1 582 100 A1**
(43) Date of publication of application: **05.10.2005**
(21) Application number: 05075768.1
(22) Date of filing: 01.04.2005
(51) Int. Cl.: A23G 3/22, A23P 1/08

(54) **Installation for coating food products with a fluid substance**

(30) Priority: 02.04.2004 NL 1025876
(71) Applicant: CFS Bakel B.V., 5761 EN Bakel (NL)
(72) Inventor: Snijders, Manfred J. H. J., 5763 BJ Milheeze (NL); Van Duijnhoven, Petrus Johannes, 5721 ZH Asten (NL)
(74) Representative: van Westenbrugge, Andries

(57) **Abstract**

An installation for coating food products (12) with a fluid substance, such as a fluid mixture, comprises a frame (1) provided with an endless conveyor belt (3) that allows the substance through, which conveyor belt (3) has a lower part (5) and an upper part (4), on which upper part (4) the products (12) can be accommodated and can be transported, as well as a buffer (13) below the upper part of the conveyor belt for forming a quantity of the substance, such that the upper part (4) of the conveyor belt (3) can be guided through said quantity of substance. The buffer (13) which is located below the upper part of the conveyor belt can be tilted about a pivot shaft (17) transverse with respect to, and parallel to, the conveyor belt (3).

## Description

The invention relates to an installation for coating food products with a fluid substance, such as a fluid mixture, comprising a frame provided with an endless conveyor belt that allows the substance through, which conveyor belt has a lower part and an upper part, on which upper part the products can be accommodated and can be transported, as well as a buffer below the upper part of the conveyor belt for forming a quantity of the substance, such that the upper part of the conveyor belt can be guided through said quantity of substance.

Such an installation is known. The fluid mixture can be fed to the buffer by means of a pump. A quantity of fluid mixture, which has a certain thickness, thus forms in the buffer. Any excess substance supplied is able to run off over the overflow edges of the buffer that are located at the front and rear end thereof. As a result said thickness can be maintained within certain limits.

The food products are usually fed to the installation in a regular pattern. Said pattern is determined by the equipment for carrying out the preceding production steps and must be maintained during the treatment process in order to ensure a uniform result. The known installation is found to be less satisfactory in this regard. Specifically, as soon as the food products arrive at the buffer they collide with the quantity of substance that has collected there. As a result, the food products are subject to a certain resistance against further movement with the conveyor. The consequence of this is that some products initially become stuck and that others move further. It is true that the following products ensure that the forward movement does not falter, but the regularity in the pattern is thus lost.

The aim of the invention is, therefore, to provide an installation of the abovementioned type that does not have this disadvantage. Said aim is achieved in that the buffer can be tilted about an axis of rotation transverse with respect to, and parallel to, the conveyor belt. In particular, the axis of rotation can be at the end of the buffer that faces in the opposite direction to the direction of transport of the upper part of the conveyor belt.

In the case of the installation according to the invention the degree to which the approaching products collide with the fluid substance can be substantially moderated by lowering the buffer to some extent at the end where the conveyor belt arrives. The quantity of material, which still has a certain thickness; extends less far above the conveyor belt as a result of tilting of the buffer. The food products can then gradually be taken up in the quantity of fluid substance without the occurrence of collision forces that are too high. They then move further towards the substance rising to an increasingly greater extent above the conveyor belt, such that the underside of the food products can be completely coated.

The surface of the buffer can be lowered such that the top part of the conveyor belt runs correspondingly lowered at the location of the buffer. With this arrangement the products can be taken up relatively far down in the quantity of fluid substance, which makes the step for coating the bottom more reliable. However, the preference is for a buffer with a flat surface. With such a surface no back-flow of the substance takes place, which ensures uniform transport of the products and consequently maintenance of the order thereof.

As a supplementary feature there can be buffer means above the upper part of the conveyor belt for coating the top of the product. Said buffer means can comprise a first buffer, at at least one edge of which there is an overflow for the substance. There can also be a further buffer beneath each overflow edge of the first buffer, which further buffer(s) each have at least one overflow edge.

The invention will be explained in more detail below with reference to an illustrative embodiment shown in the figures.
Figure 1 shows an installation according to the invention, partially in perspective.
Figure 2 shows a further view in perspective.
Figure 3 shows a view in perspective and in longitudinal section of the installation according to Figure 1.
Figure 4 shows a diagram of the principle of the installation according to the invention.
Figure 5 shows a further diagram of the principle.
Figure 6 shows a detail of the buffer in section, viewed from the rear of the installation according to Figure 1.

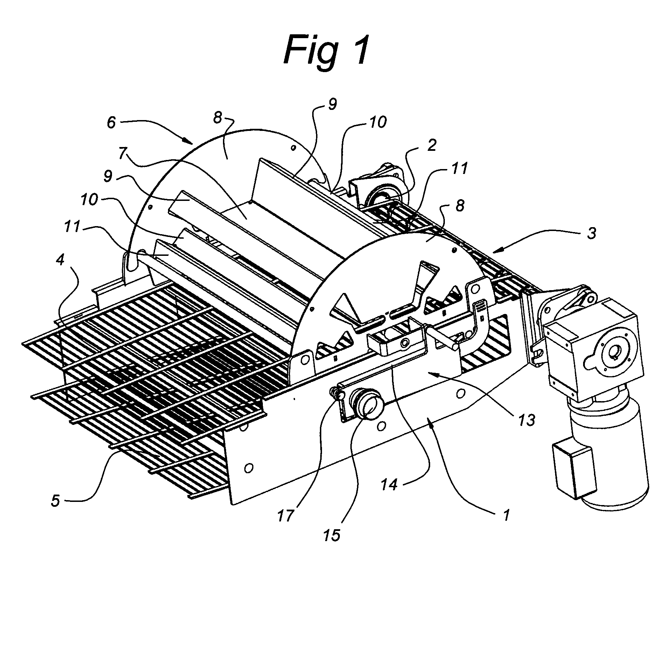

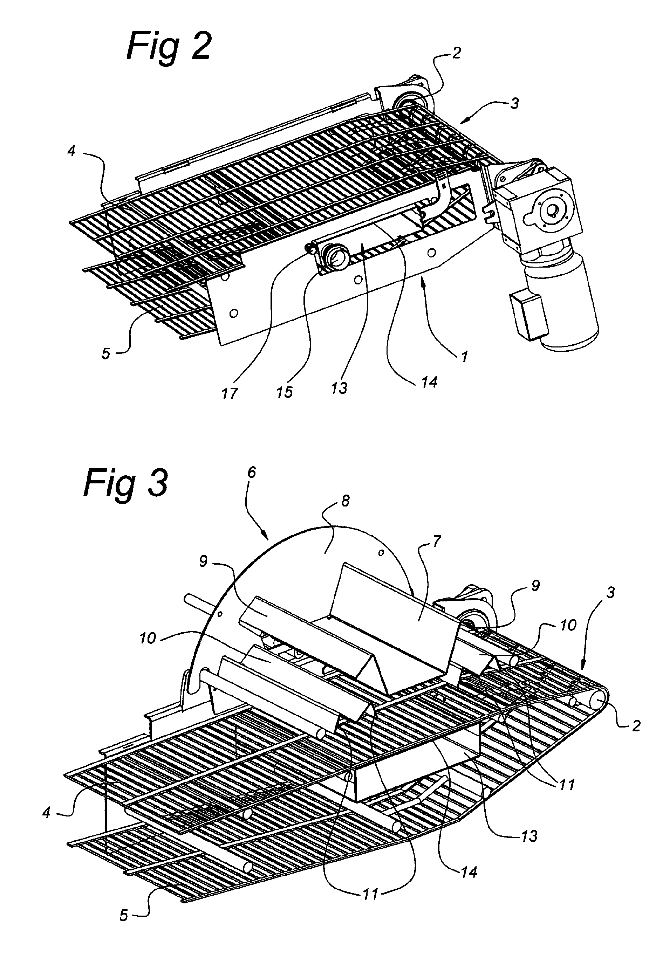

The installation according to the invention shown in Figures 1 - 3 comprises a frame 1, provided with a return roller 2 that is mounted in the frame such that it can turn. At the opposite end of the frame 1, which is not shown, there is likewise a return roller. The conveyor belt that allows substance through, indicated in its entirety by 3, is fitted around the return roller 2. This conveyor belt has an upper part 4 and a lower part 5.

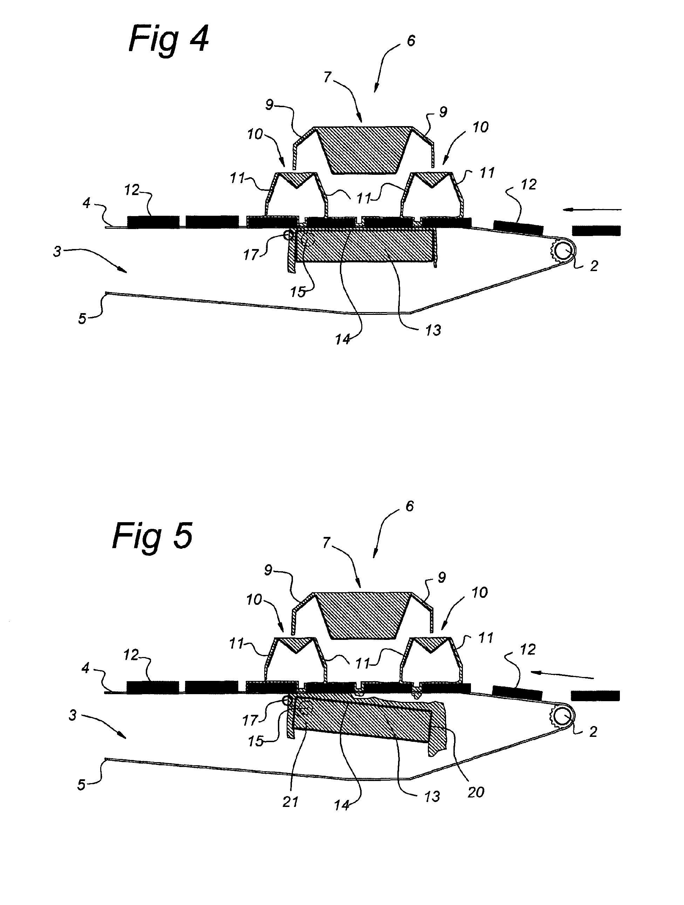

The buffer means indicated in their entirety by 6 for the substance with which the products that are transported on the upper part 4 of the conveyor belt 1 have to be coated are arranged above the upper part 4. These buffer means 6 comprise a first buffer 7, to which the fluid substance is fed from a feed device which is not shown. The buffer 7 is closed off at both ends by an end wall 8. The buffer 7 has overflow edges 9 on both sides, beneath which there are further buffers 10. These further buffers 10 likewise have overflow edges 11, from which overflow edges 11 the substance finally lands on the products 12 as shown in the diagrams of the principle in Figures 4 and 5. Four curtains of substance moving downwards are formed in this way, such that the products are coated on the top in a reliable manner. In Figures 4 and 5 the direction of transport is indicated by arrows.

The buffer according to the invention and indicated in its entirety by 13 is provided for coating the products on the underside. This buffer 13 comprises a trough that is delimited at the top by the cover plate 14. As shown in Figures 4 and 5, fluid substance is fed via the feed tube 15, which fluid substance reaches the top of the cover plate 14 via slits 26. As a result a layer of substance is produced through which the upper part 4 of the conveyor belt is able to move.

If the quantity of substance on top of the cover plate 14 becomes too thick, such that products that have not yet been coated are able to collide with it and would become stuck, the buffer 13 can be tilted to some extent as shown in Figure 5. To this end the buffer 13 is pivotably mounted about the pivot shaft 17. Consequently the part of the buffer 13 facing the approaching products that have not yet been coated can drop down below the upper part of the conveyor belt to some extent. As a result the quantity of substance that is on the cover plate 14 rises less far above the conveyor belt and initially can even drop completely below it. On further transport of the products on the conveyor belt 4 they reach the region where the substance on top of the cover plate 14 again emerges above the conveyor belt to some extent and via the openings therein. As a result a very gradual input of the products 12 into the substance on the cover plate 14 can be obtained. In this way it is possible, on the one hand, to conserve the pattern of the products 12 on the upper part 4 of the conveyor belt 3 whilst, on the other hand, a reliable coating on the underside is obtained.

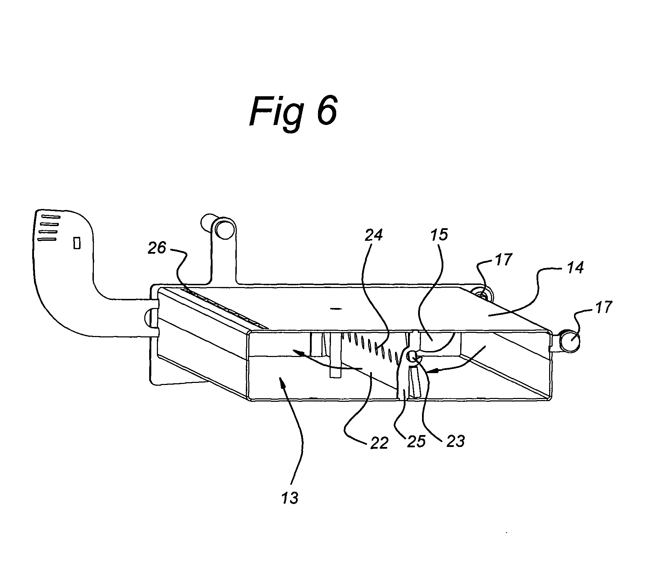

Figure 6 shows a partial view of the buffer 13 in perspective and in section. In the buffer 13 there is a flap 22 for distributing the substance. This flap 22 is mounted, such that it can turn to some extent, by means of pivots 23. The substance is fed on the right of the flap 22 in Figure 6 via feed tube 15. During this operation the flap 22 is pushed shut against the stop 25, which is achieved by positioning the pivots 23 above the middle of the flap 22. The substance is uniformly distributed over the width of the buffer 13, and thus over the width of the slit 21, via the holes 24 in the flap 22.

When cleaning, the flap 22 is turned so that it is somewhat free of the top wall and the bottom wall of the buffer 13, such that no residues of the substance remain behind.

Although in the embodiment shown the buffer 13 is pivotable about a pivot shaft, other rotation means for making the buffer pivot are possible as well. As an example, reference is made to rotation means which comprise curved tracks, the buffer being e.g. supported on said tracks by means of rollers or slide blocks. In such embodiment, the (imaginary) axis of rotation may be positioned e.g. below the buffer. The curved tracks need not be circular, but may be shaped as desired, for instance with track parts having different radii of curvature.

## Claims

1. Installation for coating food products (12) with a fluid substance, such as a fluid mixture, comprising a frame (1) provided with an endless conveyor belt (3) that allows the substance through, which conveyor belt (3) has a lower part (5) and an upper part (4), on which upper part (4) the products (12) can be accommodated and can be transported, as well as a buffer (13) below the upper part (4) of the conveyor belt (3) for forming a quantity of the substance, such that the upper part (4) of the conveyor belt (3) can be guided through said quantity of substance, **characterised in that** the buffer (13) which is located below the upper part (4) of the conveyor belt (3) can be tilted about an axis of rotation (17) transverse with respect to, and parallel to, the conveyor belt (3).

2. Installation according to Claim 1, wherein the pivot shaft (17) is at the end of the buffer (13) that faces in the opposite direction to the direction of transport of the upper part (4) of the conveyor belt (3).

3. Installation according to Claim 1 or 2, wherein the buffer (13) is delimited at the top by a plate (14) through which is the substance can pass.

4. Installation according to Claim 3, wherein the plate (14) of the buffer (13) is flat.

5. Installation according to Claim 3, wherein the plate (14) of the buffer (13) is lowered such that the upper part (4) of the conveyor belt (3) runs correspondingly lowered at the location of the buffer (13).

6. Installation according to one of the preceding claims, wherein the front end and the rear end of the buffer (13) are designed as overflow edges (20, 21) for the substance.

7. Installation according to one of the preceding claims, wherein there are buffer means (6) above the upper part of the conveyor belt for coating the top of the products (12).

8. Installation according to Claim 7, wherein the buffer means (6) comprise a first buffer (7), at at least one edge of which there is an overflow (9) for the substance.

9. Installation according to Claim 8, wherein there is a further buffer (10) beneath each overflow edge (9) of the first buffer (7), which further buffer(s) (10) each have at least one overflow edge (11).

10. Installation according to one of the preceding claims, wherein a distribution member (22-24) is provided in the buffer (13) located below the upper part (4) of the conveyor belt (3) for distributing the substance over the width of the buffer (13).

11. Installation according to one of the preceding claims, wherein the buffer (13) located below the upper part (4) of the conveyor belt (3) has a connection (15) for feeding the substance.
